# EUROPÄISCHE PATENTSCHRIFT

(11) **EP 1 437 516 B1**
(45) Veröffentlichungstag und Bekanntmachung des Hinweises auf die Patenterteilung: **07.11.2007**
(21) Anmeldenummer: 04100531.5
(22) Anmeldetag: 05.05.2001
(51) Int. Cl.: F16C 13/02, D21F 7/02

(54) **Antriebseinheit**
Driving unit
Dispositif d'entraînement

(30) Priorität: 22.05.2000 DE 10025316; 21.07.2000 DE 10035578
(43) Veröffentlichungstag der Anmeldung: 14.07.2004
(62) Teilanmeldung aus: 01110935.2
(73) Patentinhaber: Voith Patent GmbH, 89522 Heidenheim (DE)
(72) Erfinder: Beisiegel, Diethelm, 89547 Gerstetten (DE)

(56) Entgegenhaltungen:
- WO-A-90/08222
- WO-A-96/22504
- DE-U- 8 703 410
- US-A- 1 909 792
- US-A- 3 997 952
- US-A- 4 614 228

## Beschreibung

Die Erfindung betrifft eine Antriebseinheit für drehende Bauteile wie Walzen und Zylinder einer Maschine zur Herstellung und/oder Bearbeitung einer laufenden Materialbahn, insbesondere aus Papier oder Karton, wobei die drehenden Bauteile jeweils an wenigstens einem ihrer stirnseitigen Enden einen Lagerzapfen aufweisen und einen eigenen Antriebsmotor aufnehmen. Das drehende Bauteil und sein Antriebsmotor sind gemeinsam ortsfest abgestützt. Es ist ein Gehäuse vorgesehen, welches sowohl den Antriebsmotor als auch die Lagerung des Bauteiles umgibt.

Der Antrieb von Bauteilen, das heißt der Walzen und Zylinder z.B. Trockenzylinder, Streichwalzen für Streichmaschinen, Kalanderwalzen, Saugwalzen, Leitwalzen, Presswalzen und dergleichen innerhalb einer Papiermaschine, einer Papierveredelungsmaschine oder Papier- Weiterverarbeitungsmaschine erfolgt derzeit über eine Vielzahl von Motoren auf der Antriebsseite dieser Maschinen.

Damit sind auch eine Vielzahl von Getrieben, Kupplungen, Gelenkwellen und Anschlussteilen vorhanden. Diese Dichte von sogenannten Antriebsteilen schränkt bei der Montage oder Wartung der Maschine die Zugänglichkeit äußerst ein.

Besonders für die vorhandenen Getriebezahnräder sind Radkästen notwendig, die die ganze Konstruktion teuer und aufwendig machen.

Aus diesem Grunde ist mit der DE 8703410.7 eine Lösung geschaffen worden, die erstmals einen Antrieb unter Wegfall eines Getriebes und damit Wegfall der vorstehend genannten Radkästen ermöglicht.

Aus der genannten DE 8703410.7 ist ein Trockenzylinder bekannt, der mittels einem Permanentmagnetmotor angetrieben wird. Der Wellenzapfen dieses Trockenzylinders nimmt den elektrischen Antriebsmotor und die Wellenlagerung auf und ist in einem ortsfest abgestützten Rahmenteil (bzw. Stuhlung der Papiermaschine) gelagert. Antriebsmotor und Lagerung sind gemeinsam in einem Gehäuse untergebracht. Das Gehäuse ist in Richtung auf die Stirnwand des Zylinders hohlzylindrisch erweitert und nimmt in diesem erweiterten Bereich den Antriebsmotor auf.

Diese Antriebseinheit ist zwar im Vergleich zu vorstehend genannten früheren Antrieben sehr platzsparend. Jedoch sind nach wie vor teure und aufwendig den Konturen der Gehäuse und anderen Bauteile herzustellende und anzupassende Teile der ortsfesten Abstützung bzw. Stuhlung notwendig, die weiterhin die Zugänglichkeit der Herstellungs- oder Bearbeitungsmaschine behindern und einen immer noch großen Kostenfaktor darstellen. *Dieselben Nachteile weist auch eine in der* US-A-3997952 *beschriebene Lösung für ein Walzwerk auf.*

Der Erfindung liegt daher die Aufgabe zu Grunde, eine solche Antriebseinheit zu schaffen, bei der die Teilevielfalt und Teileanzahl für die ortsfeste Abstützung reduzierbar sowie Platz- und Kosten- sparende Antriebssysteme einsetzbar sind.

Die Aufgabe der Erfindung wird durch die kennzeichnenden Merkmale des Anspruches 1 gelöst. Erfindungsgemäß weist das jeweilige Gehäuse einen über seine gesamte Länge reichenden Querschnitt und mindestens eine Abschlußfläche auf. Das jeweilige Gehäuse ist derart ausgebildet, dass es gemeinsam mit einem weiteren Gehäuse und mit mindestens einem Zwischenstück zwischen den Anschlußflächen der jeweiligen Gehäuse modulartig zu einer ortsfesten Abstützung aufbaubar ist.

Die Gehäuseteile sind auf einfachere Weise als bisher herstellbar. Sie können als Blechpakete mittels Laser zugeschnitten und in der gewünschten Bauform z.B. als Quader, Parallelogrammkörper oder dergleichen., miteinander beispielsweise verschweißt werden. Damit sind Gehäuse bzw. ein Baukastensystem von Gehäusen und Zwischenstücken. Bauteile von gleicher Bauart und Form sind so auf einfache Weise modulartig zu einer kompakten Abstützung bzw. Stuhlung aufbaubar. Zweckmäßig ist es, verschiedene Baugrößen (z.B. drei bis vier) zu fertigen, je nach Größe der in Frage kommenden Maschinen bzw. anzutreibenden Bauteile.

Durch diesen modulartigen Aufbau ist es erstmals möglich, den Platzbedarf im Antriebs- und Stuhlungsbereich der Maschine zu minimieren. Es werden entweder gar keine oder bedeutend weniger herkömmliche Stuhlungsteile benötigt. Dadurch kann die Abstützung der anzutreibenden Bauteile auf der Führer- und der Triebseite gleichermaßen ausgebildet werden. Es müssen dadurch bedeutend weniger redundante Teile bevorratet werden. Das bedeutet natürlich eine enorme Aufwands- und Kosten-Minimierung.

Zweckmäßig ist es, wenn Zwischenstücke, die die einzelnen Antriebseinheiten räumlich voneinander trennen, ebenfalls von vieleckiger (polygoner) Bauart sind.

Weiterhin ist es vorteilhaft, wenn die Zwischenstücke adäquat aufgebaut wie die Gehäuse sind, d. h. also gleiche Form, gleichen Werkstoff und gleiche Größe wie die Gehäuse haben. Sie weisen ebenfalls vorzugsweise plane Anschlußflächen auf, wodurch sie kraftschlüssig beispielsweise über Schraubverbindungen modulartig zusammensetzbar und wie oben beschrieben, als tragende Teile zusammen mit den Gehäusen, zur Abstützung der drehenden Bauteile in beliebiger Größe aufgebaut werden können.

Dazu ist es vorteilhaft, wenn die Gehäuse und die Zwischenstücke so dimensioniert sind, dass das Verhältnis Länge : Breite ungefähr dem Verhältnis Höhe : Breite entspricht und dieses Verhältnis ungefähr 1:2 bis 1:3 beträgt. So kann beispielsweise die Höhe zwischen 500 und 800 mm, die Länge ca. 500 mm und die Breite ca. 1000 bis 1500 mm betragen. Diese einheitlichen Größen lassen sich dadurch in Massenfertigung herstellen.

Es soll noch erwähnt werden, dass die Gehäusegröße auf die Größe des verwendeten Motors und der Walzenlagerung abgestimmt ist.

Eine vorteilhafte Ausgestaltung des Gehäuses kann darin bestehen, dass dieses zweiteilig ausgeführt ist, wobei der eine Teil bis über die komplette Breite des Antriebsmotors und das andere Teil über das Walzenlager reicht. Beide Teile sind miteinander verbunden und wieder demontierbar. Wartungsarbeiten oder Montage- bzw. Demontage-Zeiten lassen sich dadurch vereinfachen und minimieren.

Für das Antreiben der Bauteile hat sich besonders ein handelsüblicher Asynchron-Drehstrommotor erwiesen.

Solch ein Motor ist ein sogenannter Aufsteckmotor, der in sehr schmaler Breite verfügbar ist.

Als Antriebsmotor eignet sich dabei ein solcher, wie er in der DE 29908433 beschrieben, hierbei allerdings nur allein von einem Gehäuse umgeben ist.

Wird der Motor- im Gegensatz zur vorstehend genannten Lösung - am stirnseitigen Ende des Walzenzapfens, im Anschluss an die Walzenlagerung aufgesetzt, hat das Vorteile hinsichtlich einer leichteren Demontage. Insgesamt bieten sich dadurch Vorteile hinsichtlich der Abmaße der Gehäuse, die dadurch in engen Bereichen gehalten werden können, wodurch nur wenig Bauraum beansprucht wird und die Materialkosten deshalb gering sind.

Mit der Anwendung dieser Generation von Hohlwellen- Aufsteckmotoren ohne Getriebe, wird die Zugänglichkeit zur Maschine bedeutend verbessert. Außerdem sind keine teuren Getriebe- Radkästen - wie es beim früheren Stand der Technik noch der Fall war - notwendig, wodurch die Konstruktion der Maschinen-StuhlungsTeile bedeutend vereinfacht wird.

Die Erfindung soll nachstehend anhand eines Ausführungsbeispieles näher erläutert werden.

Es zeigen
- **Figur 1**:: in schematischer Darstellung ein Längsschnitt durch das erfindungsgemäße, antriebsseitige Ende einer Walze einer Papiermaschine.
- **Figuren 2 bis 4:**: schematische, perspektivische Darstellungen von Ausführungsvarianten des erfindungsgemäßen modulartigen Aufbaues.

In den Figuren wurden für gleiche Bauteile auch gleiche Positionszahlen verwendet.

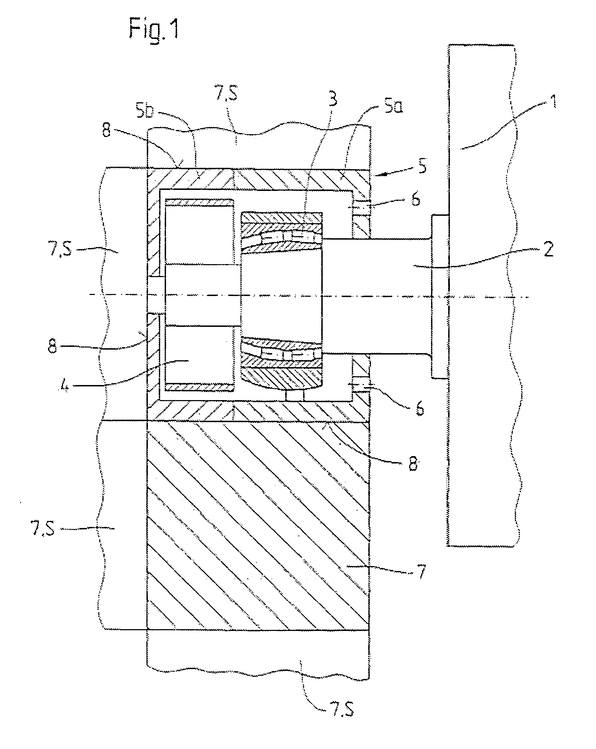

- **Figur 1**: zeigt ein stirnseitiges Ende des Antriebes einer Walze 1, die im Beispiel ein, Trockenzylinder sein soll, im Nachfolgenden aber weiterhin als Walze bezeichnet wird.

Im rechten Bildteil ist das stirnseitige eine Ende der Walze 1 noch mit dargestellt. Die Walze 1 ist mit einem Wellenzapfen 2 versehen, die ein Wälzlager 3 für die Walze 1 aufnimmt.

Am zur Walze 1 abgewandten Ende des Wellenzapfens 2 befindet sich ein Motor 4 für den Antrieb der Walze.

Im Beispiel dafür wurde zweckmäßigerweise ein sogenannter Aufsteckmotor mit Hohlwelle verwendet. Dieser Motor ist ein Drehstrom- Asynchronmotor mit hoher Polpaarzahl (>12).

Da dieser Motor scheibenartig aufgebaut und daher sehr schmal ist, ist der benötigte Platzbedarf in axialer Richtung nur sehr gering. Außerdem kann so problemlos auch ein oder noch mehrere solcher Motoren aufgesteckt werden, wenn die Walze mit unterschiedlichen Drehzahlen gefahren werden soll.

Das Lager 3 sowie der Motor (gegebenenfalls weitere Motoren) 4 sind im gewählten Beispiel von einem quaderförmigen Gehäuse 5 mit Kantenlängen Länge (L) x Breite (B) x Höhe (H) ∼ 400 bis 500 x 1500 x 1000 bis 2000 mm umgeben.

Das Gehäuse besteht vorzugsweise aus dem Werkstoff Stahl, dessen Einzelteile sich gut miteinander verschweißen lassen.

Selbstverständlich wären auch andere geometrische Formen, wie Gehäuse mit dreieckigem, parallelogrammförmigen, trapezförmigen oder quadratischem Querschnitt denkbar, weil diese Formen sich leicht fertigen und auch für den gewünschten Zweck gut zusammenbauen lassen.

Aus der Figur ist entnehmbar, dass das rechteckige Gehäuse aus zwei Teilen, Teil 5a und Teil 5b gefertigt ist.

Das hat zum einen Vorteile bei der Fertigung des Gehäuses selbst, aber vor allem ist die Demontage dadurch einfacher bei Wartungsarbeiten zu realisieren. Der Teil 5a überdeckt das Lager 3 und der Teil 5b den Motor.

Aus der **Figur 1** ist ein dem Gehäuse 5 in Größe und Form adäquates, paralleles Zwischenstück 7. welches ebenfalls wie das Gehäuse 5 Teil eines Baukastensystems ist, entnehmbar.

Dieses Zwischenstück 7 ist in der **Figur 1** unterhalb des Gehäuses 5 dargestellt und oberhalb sowie seitlich des Gehäuses 5 nur angedeutet. Das Zwischenstück 7 ist an einer parallelen Anschlußfläche 8 mit dem Gehäuse 5 bzw. 5a und 5b kraftschlüssig, z.B. durch Verschweißen verbunden. Auf Grund dieser einfach herstellbaren und stapelbaren - hier kastenförmigen Ausführung - ist es möglich, mehrere Motoreinheiten modulartig in gewünschtem Maße beliebig übereinander und nebeneinander aufzubauen, so dass sich insgesamt eine tragende ortsfeste Abstützung A der Bauteile innerhalb der Maschine ergibt. Damit lässt sich sogar eine stabile Stuhlung S der Maschine bilden oder diese auf zweckmäßige Weise ergänzen. In der **Figur 1** sind die gebildeten oder bereits bestehenden Stuhlungsteile mit Position S gekennzeichnet.

Das so geschaffene Modul hat den Vorteil, dass nunmehr kleinere Rastermaße als sie bisher für die Stuhlung S nötig waren, möglich sind.

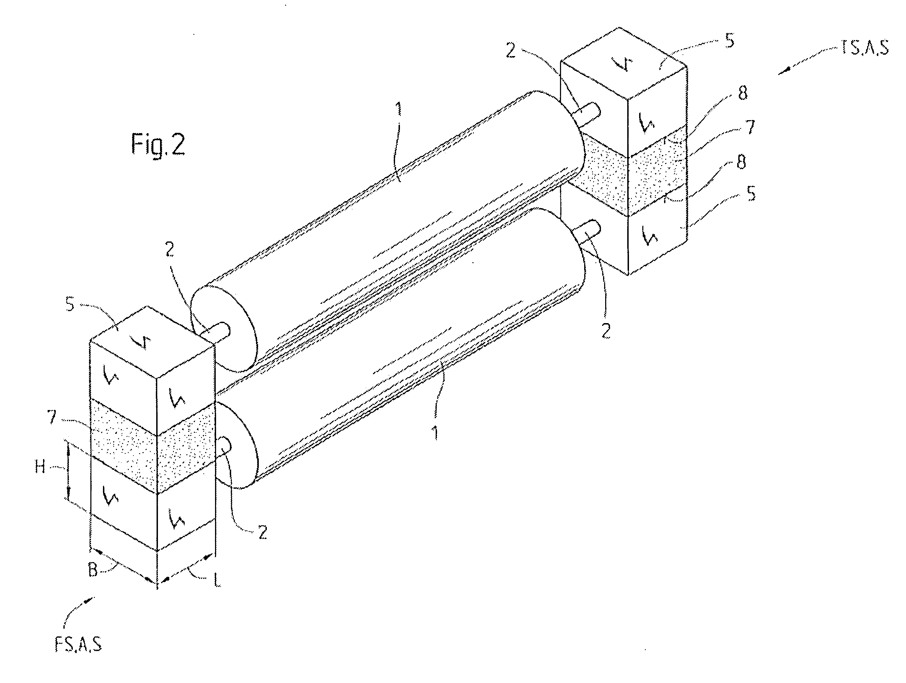

Aus den **Figuren 2 bis 4** sind Ausführungsvarianten der Bildung der vorstehend genannten Module schematisch grob dargestellt. So zeigt **Figur 2** ein Walzenpaar, das beispielsweise ein Glättwerk, ein Presswalzen- oder Speedsizer-/-Coater-Paar sein kann.

Hierbei sind Gehäuse 5 und ein Zwischenstück 7 übereinander angeordnet.

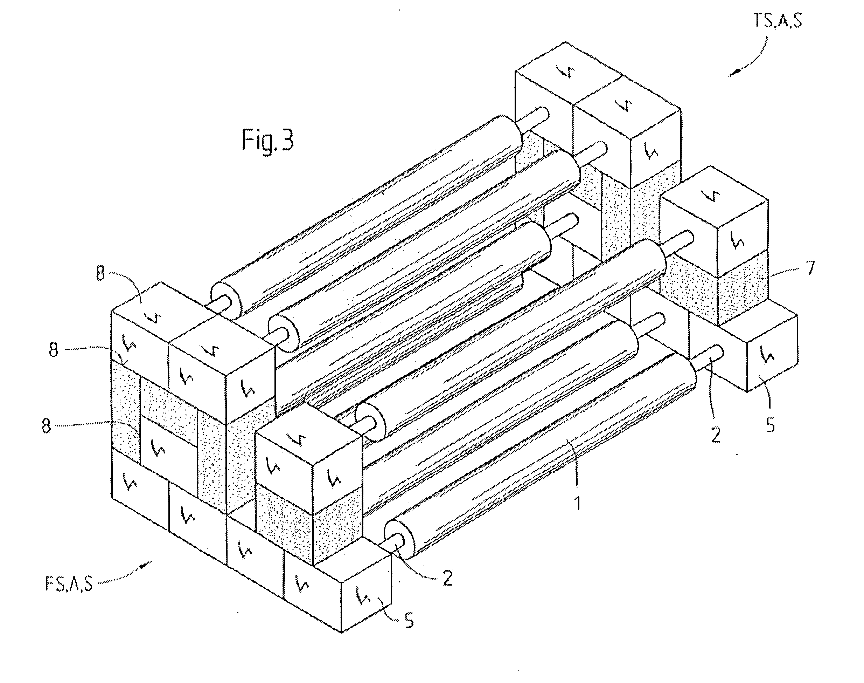

In der **Figur 3** ist ein Walzenpaket bzw. eine Schaar von Walzen dargestellt, welche Leitwalzen, oder Trockenzylinder sein können. Die Motorengehäuse 5 und die Zwischenstücke 7 sind hierbei übereinander und nebeneinander immer jeweils an den parallelen Anschlußflächen 8 miteinander verbunden.

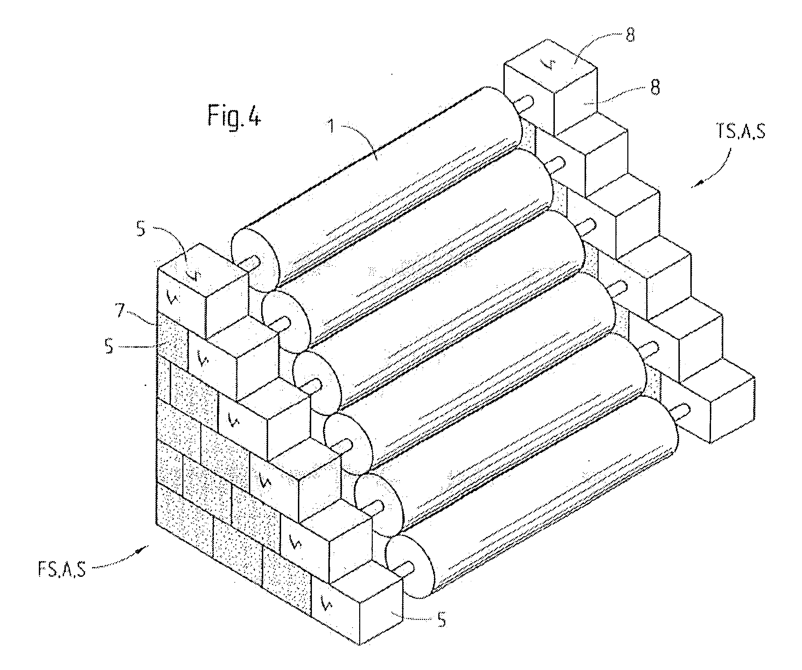

Schließlich stellt die **Figur 4** eine weitere mögliche Variante in Form eines Walzenpaketes mit schräg, treppenartig aufsteigend angeordneten Motorgehäusen 5 dar, wie sie bei einem Kalander aufgebaut sein können.

Bei den **Figuren 3 und 4** bilden die Gehäuse und Zwischenräume gleichzeitig die Stuhlung S der Maschine.

Man erkennt aus den **Figuren 2 bis 4,** die Gleichartigkeit der gebildeten Stuhlung S, das heißt der ortsfesten Abstützung A auf Trieb (TS)- und Führerseite (FS) der Maschine.

Die erfindungsgemäße Antriebseinheit kommt mit weniger und einfacher gestalteten sowie kleiner dimensionierten Bauteilen-auch der Antriebsmotoren-aus, was besonders vorteilhaft im Hinblick auf die Kosten für Konstruktion, Bau, Transport und Lagerhaltung ist.

In der Wandung des Gehäuses 5 sind Bohrungen 6 vorhanden, durch die verschiedene Leitungen mit Kühlfluid und Schmiermittel in das Innere des Gehäuses 5 gelangen können.

## Patentansprüche

1. Antriebseinheit für drehende Bauteile, wie Walzen und Zylinder einer Maschine zur Herstellung und/oder Bearbeitung einer laufenden Materialbahn, insbesondere aus Papier oder Karton, wobei
a) die drehenden Bauteile (1) jeweils an wenigstens einem ihrer stirnseitigen Enden Lagerzapfen (2) aufweisen
b) die stirnseitigen Lagerzapfen (2) jeweils einen eigenen Antriebsmotor (4) aufnehmen
c) das jeweilige Bauteil (1) und der Antriebsmotor (4) gemeinsam ortsfest abgestützt sind
d) ein Gehäuse (5) vorgesehen ist, welches sowohl den Antriebsmotor (4) als auch die Lagerung (3) des jeweiligen Bauteiles (1) umgibt
**dadurch gekennzeichnet, dass**
e) das jeweilige Gehäuse (5) einen über seine gesamte Länge reichenden Querschnitt mit mindestens einer Anschlussfläche (8) aufweist und
f) das jeweilige Gehäuse (5) derart ausgebildet ist, das es *gemeinsam* mit wenigstens einem weiteren Gehäuse (5) und mit mindestens einem Zwischenstück (7) zwischen den Anschlußflächen (8) der jeweiligen Gehäuse (5) modulartig zur ortsfesten Abstützung (A) aufbaubar ist.

2. Antriebseinheit nach Anspruch 1,
**dadurch gekennzeichnet, dass**
der Querschnitt des jeweiligen Gehäuses (5) polygon ausgebildet ist.

3. Antriebseinheit nach Anspruch 1 oder 2,
**dadurch gekennzeichnet, dass**
das Zwischenstück (7) adäquat zum Gehäuse (5) ausgebildet ist.

4. Antriebseinheit nach einem oder mehreren der Ansprüch 1 bis 3,
**dadurch gekennzeichnet, dass**
jedes Gehäuse (5) und jedes Zwischenstück (7) quader-, prismen-, oder parallelogrammepiped- förmig ausgebildet ist und aus dem Werkstoff Stahl besteht.

5. Antriebseinheit nach einem oder mehreren der vorangehenden Ansprüche,
**dadurch gekennzeichnet, dass**
das jeweilige Gehäuse (5) mit Bohrungen (6) zum Durchleiten eines Kühlfluides versehen ist.

6. Antriebseinheit nach einem oder mehreren der vorangehenden Ansprüche,
**dadurch gekennzeichnet, dass**
jedes Gehäuse (5) und jedes Zwischenstück (7) eine solche Dimension aufweist, die annähernd der Beziehung: Länge : Breite - Höhe : Breite = 1 : 2 bis 1 : 3 entspricht, wobei verschiedene Baugrößen wählbar sind.

7. Antriebseinheit nach einem oder mehreren der vorangehenden Ansprüche,
**dadurch gekennzeichnet, dass**
im jeweiligen Gehäuse (5) der Antriebsmotor (4) sowie eine Lagerung (3) für das anzutreibende Bauteil (1) untergebracht sind, wobei der Antriebsmotor am äußeren Ende des Lagerzapfens (2) angeordnet ist.

8. Antriebseinheit nach einem oder mehreren der vorangehenden Ansprüche,
**dadurch gekennzeichnet, dass**
das jeweilige Gehäuse (5) und das jeweilige Zwischenstück (7) im Bereich ihrer mindestens einen Anschlußfläche (8) miteinander kraftschlüssig verbunden sind.

9. Antriebseinheit nach einem oder mehreren der vorangehenden Ansprüche,
**dadurch gekennzeichnet, dass**
das jeweilige Gehäuse (5) geteilt, bestehend aus den Teilen (5a und 5b) ausgebildet ist.

10. Antriebseinheit nach einem oder mehreren der Ansprüche 1 bis 10,
**dadurch gekennzeichnet, dass**
die modulartig gebildete ortsfeste Abstützung in eine vorhandene Stuhlung (S) der Maschine zur Herstellung und/oder Bearbeitung einer laufenden Materialbahn integrierbar ist oder diese Stuhlung (S) selbst bildet.

11. Antriebseinheit nach einem oder mehreren der vorangehenden Ansprüche,
**dadurch gekennzeichnet, dass**
der elektrische Antriebsmotor (4) ein an sich bekannter Hohlwellen- Drehstrom-Asynchron- Aufsteck- Motor ist.

## Claims

1. Drive unit for rotating components such as rollers and cylinders of a machine for producing and/or processing a continuous material strip made in particular from paper or cardboard, wherein
a) the rotating components (1) have bearing journals (2) at in each case at least one of their end-side ends
b) the end-side bearing journals (2) hold in each case a separate drive motor (4)
c) the respective component (1) and the drive motor (4) are supported together in a positionally fixed manner,
d) a housing (5) is provided which surrounds both the drive motor (4) and also the bearing (3) of the respective component (1),
**characterized in that**
e) the respective housing (5) has a cross section, which extends over its entire length, with at least one connecting face (8) and
f) the respective housing (5) is designed such that it can be assembled in a modular fashion together with at least one further housing (5), and with at least one intermediate piece (7) between the connecting faces (8) of the respective housing (5), for positionally fixed support (A).

2. Drive unit according to Claim 1,
**characterized in that**
the cross section of the respective housing (5) is of polygonal design.

3. Drive unit according to Claim 1 or 2,
**characterized in that**
the intermediate piece (7) is designed appropriately with respect to the housing (5).

4. Drive unit according to one or more of Claims 1 to 3,
**characterized in that**
each housing (5) and each intermediate piece (7) is of cuboid-shaped, prism-shaped or parallelogramepiped-shaped design and is composed of the material steel.

5. Drive unit according to one or more of the preceding claims,
**characterized in that**
the respective housing (5) is provided with bores (6) for conveying through a cooling fluid.

6. Drive unit according to one or more of the preceding claims,
**characterized in that**
each housing (5) and each intermediate piece (7) has dimensions which correspond approximately to the relationship: length : width ∼ height : with = 1 : 2 to 1 : 3, wherein different installation sizes can be selected.

7. Drive unit according to one or more of the preceding claims,
**characterized in that**
the drive motor (4) and a bearing (3) for the component (1) which is to be driven are accommodated in the respective housing (5), with the drive motor being arranged at the outer end of the bearing journal (2).

8. Drive unit according to one or more of the preceding claims,
**characterized in that**
the respective housing (5) and the respective intermediate piece (7) are connected to one another in a force-fitting manner in the region of their at least one connecting face (8).

9. Drive unit according to one or more of the preceding claims,
**characterized in that**
the respective housing (5) is of split design, composed of the parts (5a and 5b).

10. Drive unit according to one or more of claims 1 to 9,
**characterized in that**
the positionally fixed support, which is of modular design, can be integrated into a provided frame (S) of the machine for producing and/or processing a continuous material strip, or forms said frame (S) itself.

11. Drive unit according to one or more of the preceding claims,
**characterized in that**
the electric drive motor (4) is a plug-on hollow-shaft three-phase asynchronous motor, as is known *per se*.

## Revendications

1. Dispositif d'entraînement pour des pièces tournantes, comme des rouleaux ou des cylindres d'une machine pour la fabrication et/ou le traitement d'une bande de matière, en particulier de papier ou de carton, dans lequel
a) les pièces tournantes (1) présentent respectivement des tourillons (2) à au moins une de leurs extrémité frontales,
b) les tourillons frontaux (2) comportent chacun un moteur d'entraînement propre (4),
c) la pièce respective (1) et le moteur d'entraînement (4) sont supportés localement en commun,
d) il est prévu un boîtier (5), qui entoure aussi bien le moteur d'entraînement (4) que le palier (3) de la pièce respective (1),
**caractérisé en ce que**
e) le boîtier respectif (5) présente une section transversale s'étendant sur toute sa longueur avec au moins une surface de raccordement (8), et
f) le boîtier respectif (5) est réalisé de façon à pouvoir être construit en module pour le support local (A) en commun avec au moins un autre boîtier (5) et avec au moins une pièce intermédiaire (7) entre les surfaces de raccordement (8) des boîtiers respectifs (5).

2. Dispositif d'entraînement selon la revendication 1, **caractérisé en ce que** la section transversale du boîtier respectif (5) est de forme polygonale.

3. Dispositif d'entraînement selon la revendication 1 ou 2, **caractérisé en ce que** la pièce intermédiaire (7) présente une forme correspondant à celle du boîtier (5).

4. Dispositif d'entraînement selon une ou plusieurs des revendications 1 à 3, **caractérisé en ce que** chaque boîtier (5) et chaque pièce intermédiaire (7) est en forme de parallélépipède droit, de prisme ou de parallélépipède oblique et est composé d'une matière d'acier.

5. Dispositif d'entraînement selon une ou plusieurs des revendications précédentes, **caractérisé en ce que** le boîtier respectif (5) est pourvu de perçages (6) pour le passage d'un fluide de refroidissement.

6. Dispositif d'entraînement selon une ou plusieurs des revendications précédentes, **caractérisé en ce que** chaque boîtier (5) et chaque pièce intermédiaire (7) présente une dimension qui correspond approximativement au rapport longueur:largeur ∼ hauteur:largeur = 1:2 à 1:3, pour lequel on peut choisir différentes grandeurs de construction.

7. Dispositif d'entraînement selon une ou plusieurs des revendications précédentes, **caractérisé en ce que** le moteur d'entraînement (4) ainsi qu'un palier (3) pour la pièce à entraîner (1) sont installés dans le boîtier respectif (5), dans lequel le moteur d'entraînement est disposé à l'extrémité extérieure du tourillon (2).

8. Dispositif d'entraînement selon une ou plusieurs des revendications précédentes, **caractérisé en ce que** le boîtier respectif (5) et la pièce intermédiaire respective (7) sont reliés l'un à l'autre en complémentarité de force dans la région de leur au moins une surface de raccordement (8).

9. Dispositif d'entraînement selon une ou plusieurs des revendications précédentes, **caractérisé en ce que** le boîtier respectif (5) est divisé et se compose des parties (5a et 5b).

10. Dispositif d'entraînement selon une ou plusieurs des revendications 1 à 9, **caractérisé en ce que** le support local de forme modulaire peut être intégré dans un appui existant (S) de la machine pour la fabrication et/ou le traitement d'une bande de matière en défilement, ou forme lui-même cet appui (S).

11. Dispositif d'entraînement selon une ou plusieurs des revendications précédentes, **caractérisé en ce que** le moteur d'entraînement électrique (4) est un moteur à emboîtement, asynchrone, à courant continu et à arbre creux, connu en soi.
